# FASCICULE DE BREVET EUROPEEN

(11) **EP 1 857 419 B1**
(45) Date de publication et mention de la délivrance du brevet: **24.05.2017**
(21) Numéro de dépôt: 07107814.1
(22) Date de dépôt: 09.05.2007
(51) Int. Cl.: C02F 3/32, C02F 3/30

(54) **Procede et installation de traitement d'effluents**
Verfahren und Anlage zur Abwasseraufbereitung
Method and installation for processing effluents

(30) Priorité: 09.05.2006 FR 0651656
(43) Date de publication de la demande: 21.11.2007
(73) Titulaire: Michel, M. Philippe, 69110 Sainte Foy Les Lyon (FR)
(72) Inventeur: Michel, M. Philippe, 69110 Sainte Foy Les Lyon (FR)
(74) Mandataire: Cabinet Plasseraud

(56) Documents cités:
- WO-A-02/22510
- WO-A-99/32406
- WO-A-03/042114
- CH-A5- 671 571
- FR-A1- 2 782 508
- R Pujol et al.: "A new biofiltration treatment chain for small wastewater treatment plant" In: "Conference preprint book 4: 1st World Water Congress of the International Water Association", 3 July 2000 (2000-07-03) pages 31-38, * the whole document *
- K Kayser ET AL: "Nitrification in reed beds--capacity and potential control methods", Water Science & Technology, vol. 46, no. 6-7, 1 January 2002 (2002-01-01), pages 363-370, XP055259417, GB ISSN: 0273-1223

## Description

### DOMAINE DE L'INVENTION

Le domaine technique auquel se rapporte l'invention est celui des procédés et installations de traitement biologique des effluents, comprenant la mise en oeuvre d'un lit planté de roseaux pour la réalisation du traitement, et plus particulièrement pour la nitrification-dénitrification des effluents.

D'une façon générale, la capacité de traitement envisagée correspond à celle qui est nécessaire pour des petites et moyennes collectivités, c'est-à-dire des collectivités de moins de 10 000 équivalent habitants (eH), et le plus souvent, de de 50 à 2 000 eH.

### CONTEXTE TECHNIQUE DE L'INVENTION

L'assainissement des eaux usées peut être défini comme l'ensemble des techniques destinées à collecter les eaux, les évacuer et les traiter jusqu'à un niveau acceptable par le milieu récepteur. Ainsi, l'épuration des eaux usées n'est pas destinée à produire de l'eau potable mais à réduire les pollutions issues des eaux usées. On distingue plusieurs phénomènes polluants, dont notamment :
- les matières en suspension, principalement responsables de l'aspect trouble ou de la turbidité des eaux usées,
- les matières oxydables, notamment les matières organiques oxydables, qui consomment l'oxygène dissous dans l'eau et peuvent provoquer une asphyxie des organismes vivants,
- les composés azotés responsables, avec les matières phosphorées, de l'eutrophisation des plans d'eau.

La Directive européenne 91/271/CEE du Conseil du 21.05.1991, relative au traitement des eaux urbaines résiduelles, pose des objectifs de collecte et de traitement des eaux usées. Le traitement, ou épuration des eaux usées, passe par une série d'étapes successives dont chacune vise un type de polluant particulier.

On distingue ainsi des traitements primaires destinés à éliminer les polluants les plus grossiers (branches, cailloux, sable, etc.) et à retenir la fraction décantable de la pollution, les matières en suspension.

Le traitement secondaire, le plus souvent un traitement biologique, est principalement destiné à s'attaquer à la pollution sous forme dissoute ou colloïdale. Le traitement secondaire permet principalement de dégrader la matière organique, d'une part, en une fraction oxydée aboutissant à la production de CO₂ via la respiration bactérienne, et d'autre part, à une fraction comprenant de nouvelles cellules bactériennes, habituellement dénommées boues d'épuration. Le traitement secondaire correspond donc à une transformation de la matière organique plutôt qu'à une élimination complète de cette dernière.

Les traitements tertiaires visent à éliminer en particulier l'azote, par exemple présent dans des boues d'épuration, avant le rejet des effluents traités dans l'environnement.

Il existe plusieurs types de traitement secondaire d'élimination biologique des matières polluantes. De tels traitements biologiques tentent de reproduire des phénomènes d'autoépuration existant dans la nature. On distingue notamment des procédés biologiques extensifs et des procédés biologiques intensifs. Parmi les procédés biologiques extensifs, le lagunage utilise la capacité épuratrice des plans d'eau peu profonds. Les eaux usées sont envoyées dans une série de bassins. L'oxygène nécessaire au traitement est apporté par les échanges avec l'atmosphère. On considère généralement que ce mode d'épuration permet d'éliminer 80 à 90% de la DBO₅, 20 à 30% de l'azote et qu'il contribue à une réduction importante des germes pathogènes. Cependant, il a l'inconvénient d'utiliser des surfaces importantes.

Les procédés biologiques intensifs regroupent notamment les installations à boue activée, les installations à culture fixe et la biofiltration. Les installations à boue activée sont des systèmes d'épuration aérobie. La culture bactérienne est maintenue dans un bassin aéré et brassé. Les résidus formés sont appelés boues d'épuration. Après un temps de séjour dans un bassin d'aération, l'effluent est envoyé dans un clarificateur ou décanteur secondaire. Puis les boues sont soit envoyées dans une unité de traitement spécifique, en vue de leur épandage agricole ou de leur élimination, soit réinjectées pour partie dans le bassin d'aération. Généralement, les traitements par boue activée éliminent en moyenne de 85 à 95% de la DBO₅, selon les installations. C'est un traitement biologique simple mais qui s'intègre mal dans le paysage.

Dans une installation à culture fixe, ou lit bactérien, on fait ruisseler les eaux à traiter sur un support solide où se développe une culture de micro-organismes épurateurs, le film biologique ou biofilm. Au cours du fonctionnement de l'installation, lorsque le biofilm devient trop important, il se détache naturellement. Il doit alors être séparé de l'effluent par décantation, par exemple dans un décanteur secondaire. On estime que les installations à culture fixe sont généralement adaptées aux installations d'une taille inférieure à 2000 équivalent habitants. Elles permettent en moyenne d'éliminer 80% de la DBO₅.

L'élimination de l'azote est généralement réalisée par nitrification-dénitrification. L'azote organique présent dans les eaux usées est transformé en azote ammoniacal (NH₄⁺). En milieu aérobie, sous l'influence de bactéries nitrifiantes, l'azote ammoniacal est oxydé en nitrates NO₃, ce qui correspond à l'étape de nitrification. Puis, la dénitrification, sous l'action de bactéries dénitrifiantes, complète le processus. Il s'agit de la réduction en milieu anoxique des nitrates en azote gazeux N₂, qui s'échappent alors dans l'atmosphère. Les bactéries dénitrifiantes utilisent les nitrates comme source d'oxygène. Elles consomment la matière organique du milieu, le plus souvent apportée sous forme de méthanol comme source de carbone.

Les deux étapes de nitrification et de dénitrification sont réalisées dans des installations distinctes, en raison des différences de conditions environnementales nécessaires à leur bon déroulement.

Le brevet américain US 5,863,435 et la demande internationale de brevet WO2004/101448 A1 (GRONTMIJ ADVIES & TECHNIEK B.V.) concernent un procédé de traitement biologique des milieux aqueux riches en ammonium. Plus précisément, ce procédé est sensiblement comparable à une nitrification-dénitrification puisque, à partir de l'azote ammoniacal, de l'azote gazeux est dégagé dans l'atmosphère à la fin du procédé. Cependant, l'azote ammoniacal n'est pas oxydé en nitrates, mais en nitrites à l'aide de bactéries du genre *Nitrosomonas.* Les *Nitrosomonas* sont des bactéries aérobies. Aussi, une oxygénation du milieu est réalisée pendant cette première étape d'oxydation. Puis, les conditions de fonctionnement de l'installation sont modifiées pour favoriser la réduction directe des nitrites en azote gazeux, sous l'action de bactéries hétérotrophes, en milieu anoxique. Un apport de méthanol est opéré au cours de cette réduction comme source de carbone. Théoriquement, ce procédé permet de diminuer les dépenses énergétiques et la quantité de méthanol apportée. Cependant, il nécessite un réglage fin du temps de résidence des effluents dans le réacteur, sans quoi les nitrites risquent d'être oxydés en nitrates sous l'influence de bactéries du genre *Nitrobacter.* Cela nécessite également de surveiller la température du réacteur, les bactéries du genre *Nitrosomonas* ayant un taux de croissance supérieur à celles du genre *Nitrobacter à* des températures élevées.

La demande internationale de brevet WO90/02710 A1 (BREEN et al.) concerne une installation de traitement des eaux usées sur lit de roseaux. Dans cette installation, les roseaux sont plantés dans un substrat poreux disposé dans une fosse dont les parois sont rendues imperméables à l'eau. Le développement racinaire des roseaux forme un lit racinaire au sein du substrat. L'installation est alimentée en eaux usées dans la partie inférieure du substrat, en dessous du lit racinaire. Les eaux usées circulent vers le haut, à travers le substrat et elles sont évacuées par l'intermédiaire de bouches d'évacuation disposées à proximité du lit racinaire. Cette installation s'apparente à une installation de lagunage, eu égard à la faible profondeur des fosses (environ 1 m) et au caractère extensif de l'installation (entre 2 et 3 m² par équivalent habitant). En outre, ce dispositif présente l'inconvénient d'être fortement consommateur en énergie puisqu'il nécessite d'appliquer une forte pression pour faire circuler les effluents à travers le substrat, contre la gravité.

Le modèle d'utilité allemand DE 297 07 646 U1 (FAHRY et al.) concerne une installation d'épuration des eaux usées chargées en matière organique à l'aide d'un filtre biologique. Dans cette installation, les eaux usées sont récoltées dans un réservoir où elles sont filtrées. Les eaux filtrés passent dans une cuve de marnage équipée d'un système de pompage qui permet de faire circuler les eaux filtrées vers un premier lit de roseaux et éventuellement, vers un second lit de roseaux, à travers une vanne. Après son passage à travers le premier lit de roseaux, l'eau est collectée et ramenée vers la cuve de marnage. Cette dernière est équipée en outre d'un flotteur à clapets, susceptible d'obturer l'arrivée d'eaux usées provenant du réservoir.

Lorsque la vanne est ouverte, l'eau peut passer jusqu'au second lit de roseaux. Après son passage à travers le second lit de roseaux, l'eau est collectée et évacuée vers une cuve d'évacuation, à travers une canalisation coudée vers le haut. L'eau traitée quitte la cuve d'évacuation par un système de trop-plein. L'installation décrite dans ce modèle d'utilité correspond aux installations connues de l'art antérieur, comprenant deux étages de lit de roseaux indépendants, le premier pour réaliser la nitrification des effluents et le second pour réaliser la dénitrification. Ces installations présentent le problème suivant : la charge en matière carbonée des effluents qui alimentent le second lit est insuffisante pour permettre une bonne dénitrification par les bactéries dénitrifiantes. Il est donc nécessaire d'apporter une source de carbone aux bactéries dénitrifiantes, généralement du méthanol, pour augmenter le rendement de dénitrification. Cela implique donc des dépenses supplémentaires, en terme d'intrants, ainsi qu'un suivi précis du traitement des effluents pour apporter la dose adéquate de méthanol.

La demande de brevet français FR 2 782 508 A (SUEZ - LYONNAISE DES EAUX) concerne un procédé et une installation de traitement d'effluents de petite collectivité de 200 à 2 000 équivalent habitants environ. Ce procédé est caractérisé en ce qu'il consiste :
- à effectuer un traitement biologique d'effluents à l'aide d'un lit bactérien et,
à réaliser une élimination des matières en suspension dans l'effluent ainsi traité et, simultanément, un traitement des boues par filtration compostage sur des filtres plantés de roseaux.

Cette demande de brevet français vise essentiellement le traitement de la pollution carbonée, évaluée à l'aide des paramètres tels que la demande biochimique en oxygène à cinq jours (DBO₅) ou la demande chimique en oxygène (DCO).

Il ressort de ce qui précède que fournir aux petites et moyennes collectivités des procédés et installations de traitement d'effluents comprenant l'élimination des polluants azotés par nitrification-dénitrification, reste une difficulté technique actuelle, en particulier en tenant compte des contraintes dont une liste non exhaustive suit :
installation ne nécessitant pas un entretien trop important, en particulier au regard des ressources financières, techniques et humaines de la collectivité, facilité d'utilisation de l'installation et de mise en oeuvre du procédé,
limitation des coûts, en particulier en termes de besoin énergétique ou d'emprise foncière,
amélioration du rendement d'épuration,
bonne intégration de l'installation dans le paysage,
élimination des divers polluants visés dans la Directive mentionnée ci-dessus, y compris les polluants azotés,
réduction du volume de produits d'épuration finaux non valorisables,
optimisation du volume des produits d'épuration finaux valorisables,
éviter les mauvaises odeurs, dues en particulier au fonctionnement anaérobie de certaines installations d'épuration des eaux.

Ainsi, au moins un objectif essentiel de l'invention est de proposer un procédé de traitement d'effluents et, qui satisfait à au moins l'une des contraintes évoquées ci-dessus.

En particulier, un objectif de l'invention est de proposer un procédé de traitement d'effluents, susceptible d'être mis en oeuvre dans une installation dont le fonctionnement peut être supporté par une petite collectivité, en particulier du point de vue des frais d'investissement et des frais de fonctionnement.

Un autre objectif de l'invention est de proposer un procédé de traitement d'effluents comprenant l'élimination des principaux polluants, y compris la matière en suspension, la matière organique et les polluants azotés.

Un autre objectif de l'invention est de proposer un procédé biologique de traitement d'effluents.

Un autre objectif de l'invention est de proposer un procédé de traitement d'effluents qui permette de limiter la libération de mauvaises odeurs.

Un autre objectif de l'invention est de proposer un procédé de traitement des eaux, dans lesquels l'élimination des polluants azotés, en particulier de l'azote ammoniacal, peut être réalisée en une seule étape.

Un autre objectif de l'invention est d'optimiser les procédés de traitement d'effluents, en particulier l'élimination des polluants azotés.

Un autre objectif de l'invention est d'améliorer la dénitrification des effluents, en particulier afin d'éviter de recourir à un apport d'un substrat carboné supplémentaire parfois nécessaire au métabolisme des bactéries dénitrifiantes.

D'autres objectifs et avantages de l'invention seront indiqués dans la description qui va suivre.

### BREVE DESCRIPTION

Ainsi, l'invention concerne en premier lieu un procédé de traitement d'eaux usées, comprenant au moins une étape au cours de laquelle on réalise une nitrification-dénitrification des effluents à l'aide d'un filtre planté de roseaux à écoulement vertical. De préférence, l'écoulement des effluents dans le filtre planté de roseaux se fait sous la simple action de la gravité. La nitrification et la dénitrification se déroulent simultanément dans un seul et même filtre planté de roseaux spécifiquement configuré à cet effet.

Le procédé selon l'invention comprend en outre les étapes suivantes :
On réalise un prétraitement biologique des eaux usées à traiter à l'aide d'au moins un lit bactérien, notamment pour fixer la pollution organique soluble grâce à l'action des bactéries épuratrices du lit bactérien. On obtient des boues d'épurations en sortie du lit bactérien.

Puis, on réalise un traitement biologique de nitrification-dénitrification de la liqueur mixte, comprenant des boues d'épurations obtenues en sortie du lit bactérien et des effluents, à l'aide d'un filtre planté de roseaux à écoulement vertical. Les boues d'épuration constituent une source de carbone pour la nitrification et pour la dénitrification. Il peut être utile de mettre en oeuvre plusieurs filtres plantés de roseaux en série, afin d'améliorer le rendement épuratif, en particulier eu égard aux polluants azotés. Dans ce cas, le fait que les effluents soit partiellement dénitrifiés dans un premier filtre, avant de passer dans un filtre suivant, permet de diminuer la charge en polluants azotés à traiter dans le filtre de nitrification-dénitrification suivant, et donc les besoins en carbone.

Dans une variante particulière du procédé selon l'invention, en régime de fonctionnement permanent, au moins un filtre de nitrification-dénitrification comporte une zone inférieure inondée et une zone supérieure non inondée où se déroulent, respectivement, un traitement biologique essentiellement anaérobie de dénitrification et un traitement biologique essentiellement aérobie de nitrification. En particulier, en régime de fonctionnement permanent, la hauteur de la zone inondée d'au moins un filtre de nitrification-dénitrification, de préférence le premier filtre de nitrification-dénitrification, est supérieure ou égale à la hauteur de sa zone non inondée.

Selon l'invention, il n'est pas ajouté de source de carbone supplémentaire (par exemple du méthanol) pour réaliser le traitement. En d'autres termes, la charge carbonée des effluents ou des boues d'épuration est suffisante.

Il est décrit par ailleurs une installation de traitement d'effluents, conçue en particulier pour la mise en oeuvre du procédé selon l'invention. L'installation comprend :
au moins un lit bactérien équipé d'une alimentation en effluents à traiter et équipée d'une évacuation des boues d'épuration obtenues en sortie du lit bactérien,
au moins un étage de nitrification-dénitrification comprenant un filtre planté de roseaux à écoulement vertical, dont la surface supérieure est équipée d'une alimentation en boues d'épuration provenant du lit bactérien et dont le fond est équipé d'un dispositif de drainage pour collecter les effluents s'étant écoulés à travers le filtre planté de roseaux.

L'installation est caractérisée en ce que les effluents collectés par le dispositif de drainage sont évacués de l'étage de nitrification-dénitrification à l'aide d'un dispositif d'évacuation des effluents comprenant au moins une bouche d'évacuation disposée à une hauteur comprise entre le fond du filtre et la surface supérieure du filtre. Ainsi, une zone inférieure inondée et une zone supérieure non inondée sont formées dans le filtre planté de roseaux. La hauteur de la zone inondée correspond à la hauteur de la bouche d'évacuation (ou de la bouche d'évacuation la plus basse si plusieurs bouches sont présentes, mais avantageusement, toutes les bouches d'évacuation associées à un filtre donné sont à la même hauteur).

Selon une variante, le dispositif d'évacuation des effluents comprend un réservoir muni d'au moins une bouche d'alimentation en effluents collectés par le dispositif de drainage et muni en outre d'au moins une bouche d'évacuation des effluents, la bouche d'évacuation se présentant sous la forme d'un trop-plein, dont, avantageusement, la hauteur est contrôlable.

Selon une variante, l'installation comprend au moins deux étages de nitrification-dénitrification successifs, la hauteur de la zone inondée du premier étage étant différente de, de préférence supérieure à, la hauteur de la zone inondée d'au moins un étage suivant. De préférence, la hauteur de la zone inondée d'un premier étage est supérieure à celle d'un étage suivant.

Selon une variante, le filtre planté de roseaux de chaque étage de nitrification-dénitrification est divisé en une pluralité de cellules, de préférence au moins trois cellules, et chaque cellule est alimentée en effluents par permutation circulaire au cours du temps.

Selon une variante, l'installation comprend en outre un dispositif de recirculation des effluents collectés par un dispositif de drainage vers au moins un étage de nitrification-dénitrification précédent et/ou vers le lit bactérien. Avantageusement, le dispositif de recirculation des effluents est asservi au moins à un détecteur du volume d'effluents à traiter et/ou à un détecteur de localité des effluents obtenus à la sortie de l'installation.

L'invention sera mieux comprise à la lecture de la description détaillée qui va suivre, accompagnée des dessins en annexe qui font partie intégrante de la description.

### BREVE DESCRIPTION DES FIGURES

La figure 1 est une représentation schématique d'une variante d'une installation de traitement d'effluents.
La figure 2 représente un détail de l'installation et permet d'illustrer une variante de contrôle de la hauteur de la zone inondée et de la zone non inondée, dans un filtre planté de roseaux.

### DESCRIPTION DETAILLEE

Pour une bonne compréhension, divers termes vont être définis.

La notion d'équivalent habitant (eH) est utilisée en assainissement pour évaluer la capacité des stations d'épuration. La Directive européenne 91/271/CEE du Conseil du 20 mai 1991 définit un équivalent habitant comme la charge organique biodégradable ayant une demande biochimique en oxygène de cinq jours (DBO₅) de 60 g d'oxygène par jour. On estime généralement que la pollution induite par un équivalent habitant est la suivante :
- matières en suspension : 90 grammes / habitant / jour,
- matières oxydables : 57 grammes / habitant / jour,
- azote total : 15 grammes / habitant / jour,
- phosphore total : 4 grammes / habitant / jour.

La demande biologique en oxygène à cinq jours (DBO₅) est la quantité d'oxygène qu'il faut fournir à un échantillon d'eau pour minéraliser les matières organiques biodégradables contenues dans l'eau, par voie biochimique, c'est-à-dire par oxydation par des bactéries aérobie. Ce paramètre repose sur la quantification de l'oxygène consommé après incubation de l'échantillon durant cinq jours, conformément à la norme FT 90-103. La DBO₅ est exprimée en mg / L.

La demande chimique en oxygène (DCO) est déterminée en mesurant la quantité de dichromate de potassium consommé par les matières dissoutes en suspension. La DCO traduit, en quantité d'oxygène, le potentiel d'oxydation d'un oxydant chimique décomposé par les substances réductrices contenues dans l'échantillon examiné. La mesure de la DCO tient compte indifféremment des substances minérales et organiques présentes dans l'échantillon. La DCO est mesurée conformément à la norme NFT 90-101 et elle est exprimée en mg / L.

Les matières en suspension (MES) ont deux effets polluants. Tout d'abord, les MES conduisent à la formation de sédiments et à l'augmentation de la turbidité de l'eau, ce qui limite la pénétration de la lumière. En outre, les MES nécessitent de l'oxygène pour leur métabolisation, ce qui provoque un appauvrissement du milieu en oxygène. Les MES sont mesurées conformément à la norme NFT 90-105 et exprimées en mg / L.

La pollution azotée est mesurée de différentes façons, en fonction des espèces chimiques considérées :
- l'azote ammoniacal est mesuré d'après la norme NFT 90-015 ;
- l'azote Kjeldahl (NTK) est mesuré conformément à la norme NFT 90-110. Cette mesure repose sur la transformation des composés azotés dosables par minéralisation de l'échantillon. L'azote Kjeldahl représente donc les formes réduites de l'azote, c'est-à-dire l'azote organique et l'azote ammoniacal ;
- les nitrates et les nitrites sont dosés respectivement conformément aux normes NFT 90-012 et NFT 90-013.

Ces différentes mesures de l'azote sont exprimées en mg / L.

Un filtre planté de roseaux comprend généralement une fosse dont les parois sont imperméables à l'eau. La fosse comporte des couches successives de matériaux de remplissage et de filtration, dont la granulométrie est contrôlée. La surface supérieure est plantée de roseaux, par exemple de l'espèce *Phragmites australis.* D'autres espèces de roseaux ou d'autres plantes de zones humides sont envisageables, telles que d'autres espèces du genre *Phragmites* ou des espèces des genres *Scirpus* ou *Typha.* Le choix de l'espèce, ou du mélange d'espèces mis en oeuvre, dépend notamment des conditions de développement des plantes choisies, du climat et de l'abondance des effluents.

Dans un filtre planté de roseaux à écoulement vertical, la granulométrie des matériaux de remplissage augmente du haut vers le bas : les couches supérieures comprennent par exemple du sable, tandis que les couches intermédiaire et inférieure comportent par exemple, respectivement, des graviers et des galets afin d'assurer le drainage. Ainsi, les effluents à traiter arrivent au niveau de la surface supérieure du filtre, et ils sont évacués au niveau de la couche inférieure de drainage, dans le fond de la fosse.

Dans un filtre planté de roseaux à écoulement horizontal, la répartition des matériaux de remplissage et la disposition des zones d'alimentation et d'évacuation des effluents sont différentes. Par exemple, les matériaux de remplissage situés au niveau de deux des côtés opposés de la fosse ont une granulométrie importante. Ce sont par exemple des galets. L'alimentation en effluents est réalisée directement dans la fosse au niveau de l'un de ces côtés tandis que l'évacuation est réalisée au niveau du côté opposé.

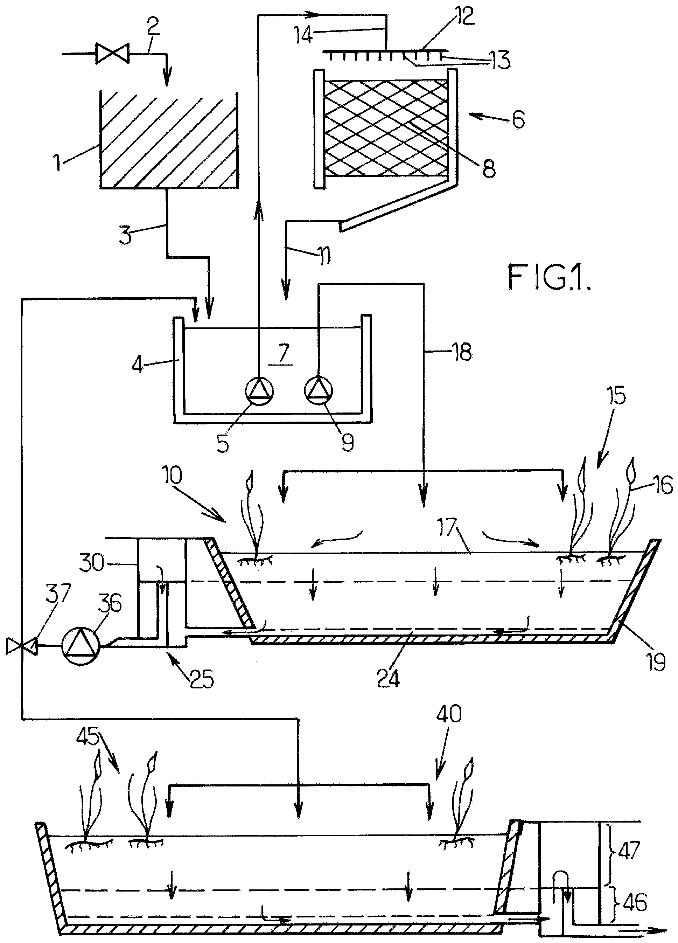

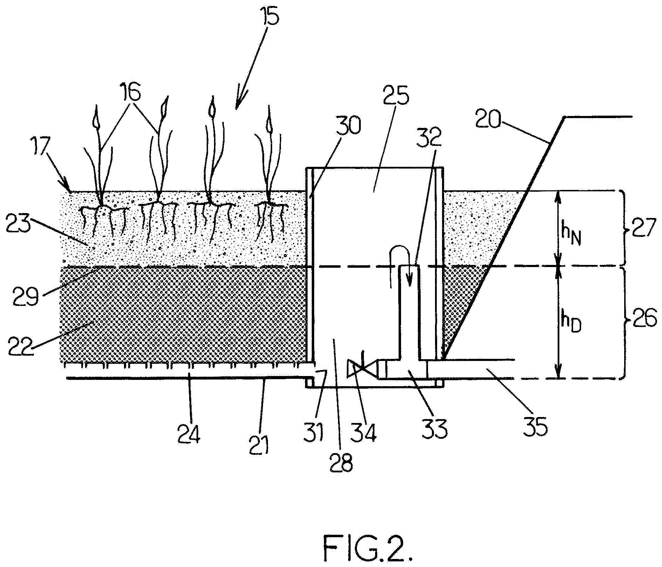

Les figures 1 et 2 représentent des variantes d'une installation de traitement d'effluents. Dans cette variante, on prévoit tout d'abord un poste de dégrillage 1 afin de prévenir tout risque de colmatage et de dépôt de déchets grossiers vers les équipements situés en aval du poste de dégrillage. Avantageusement, le poste de dégrillage permet de retenir les éléments d'une maille, ou diamètre, supérieure à 3mm.

Il peut s'agir d'un tamis dégrilleur automatique prévu, par exemple, dans le canal d'alimentation 2 de l'installation. Le dégrillage est réalisé par exemple dans une zone de filtration comprenant une tôle perforée semi-cylindrique d'où les déchets sont évacués à l'aide d'une vis sans âme. Tandis que les déchets retenus par le tamis dégrilleur sont évacués vers le haut grâce à la vis sans âme, la plus grande partie de l'eau restituée par les effluents s'écoule gravitairement. Les déchets au moins partiellement asséchés arrivent dans une zone de compactage disposée à l'extrémité de la vis sans âme. L'eau restituée pendant le compactage des déchets solides s'écoule gravitairement au travers d'ouvertures prévues dans la zone de compactage, par exemple au travers de fentes longitudinales.

Le fonctionnement d'un tamis dégrilleur automatique, ou de tout autre dispositif de dégrillage, passif ou actif, est bien connu de l'homme du métier. Aussi, il n'est pas nécessaire d'apporter plus de détails à cet égard.

L'eau et les effluents ainsi récupérés sont collectés et amenés grâce à une canalisation 3 vers un poste de refoulement 4. Le poste de refoulement 4 comporte une première pompe 5 pour alimenter un dispositif 6 de prétraitement biologique des effluents 7, à l'aide d'au moins un lit bactérien 8. Le poste de refoulement 4 comporte également une deuxième pompe 9 pour l'alimentation d'un premier étage 10 de nitrification-dénitrification.

Dans une autre variante, le poste de refoulement 4 ne comporte qu'une seule pompe pour l'alimentation du dispositif 6 de prétraitement biologique des effluents 7 et du premier étage 10 de nitrification-dénitrification. L'alimentation de l'un ou l'autre de ces dispositifs est commandé, par exemple, par l'intermédiaire d'une vanne ou d'un robinet, éventuellement contrôlés à distance et/ou dont le fonctionnement est asservi ou automatisé.

De préférence, dans les différentes variantes, le fonctionnement des pompes 5, 9, ou de la pompe, est contrôlé à distance, asservi et/ou automatisé.

Le lit bactérien 8 est une installation à culture fixée pour le traitement des effluents 7 à traiter. La technique consiste à faire ruisseler les effluents 7 à traiter sur un support solide présentant une grande surface développée. Une culture de micro-organismes épurateurs, le « film biologique » ou « biofilm », se développe sur ce support solide. Les micro-organismes épurateurs consomment une partie de la pollution carbonée, notamment la pollution fortement soluble. Ainsi, les polluants carbonés se trouvent fixés grâce au métabolisme et au développement bactérien. Lorsque l'épaisseur du film bactérien devient trop importante, il se décroche du support et est évacué par l'intermédiaire de canalisations 11. Ce sont les boues d'épuration. Les boues d'épuration ainsi formées sont collectées et ramenées vers le poste de refoulement 4.

Ainsi, le poste de refoulement 4 contient en réalité une liqueur mixte comprenant des effluents bruts provenant de la canalisation 3, des boues d'épuration évacuées du lit bactérien 8 par les canalisations 11. Dans certaines variantes de l'installation, la liqueur mixte peut également contenir des effluents percolés 28 provenant du filtre planté de roseaux. On appellera cette liqueur mixte « effluents à traiter ».

Le matériau support utilisé dans un lit bactérien 8 est généralement un garnissage ordonné, tel que des tubes multicanaux ou des plaques ondulées. Il présente une surface développée importante grâce au cloisonnement alvéolaire du matériau. De tels matériaux sont par exemples décrits dans les publications EP 1 310 299, EP 1 142 837 ou US 6 274 035.

Les effluents 7 à traiter sont aspergés en haut lit du bactérien 8, grâce à un bras d'aspersion 12 muni d'une série de buses d'aspersions 13 (ou « sprinkler »). Par exemple, le bras d'aspersion est rotatif, autour d'un fût central 14 d'alimentation. Cette disposition permet de répartir le flux d'effluents 7 à traiter sur la surface supérieure du lit bactérien 8. De préférence, la répartition est réalisée de la façon la plus homogène possible.

Les microorganismes du biofilm se développent naturellement par exemple du fait de leur présence naturelle dans les effluents. Les microorganismes peuvent aussi être apportés par ensemencement, par exemple afin de favoriser l'installation d'une population bactérienne.

Avantageusement, le lit bactérien permet, en moyenne d'éliminer jusqu'à 70 % de la DBO₅ des effluents traités. Par contre, il ne permet généralement pas d'éliminer la pollution azotée.

Le poste de refoulement 4 contient donc un mélange comprenant des effluents dégrillés dans le poste de dégrillage 1, et des boues d'épuration obtenues en sortie du lit bactérien 8 du dispositif 6 de prétraitement biologique. Le poste de refoulement 4 représente donc également un réservoir de marnage, dont le niveau peut être contrôlé notamment en fonction de la quantité d'effluents à traiter provenant du poste de dégrillage, des conditions de traitement au niveau du ou des étages de nitrification-dénitrification.

Le premier étage de nitrification-dénitrification 10 comprend un filtre 15 planté de roseaux 16. Le filtre 15 planté de roseaux est alimenté au niveau de sa surface supérieure 17 en effluents 7 (qui comprennent des effluents provenant de poste de dégrillage 1 et des boues d'épurations provenant du lit bactérien 8) grâce à la pompe 9 d'alimentation, par l'intermédiaire de canalisations 18.

Plus précisément, l'alimentation peut être réalisée, par exemple, par arrosage ou aspersion de la surface supérieure 17 du filtre 15 planté de roseaux, ou par inondation. L'arrosage ou l'aspersion sont effectués grâce à un rail d'arrosage/aspersion, fixe ou mobile, par exemple disposé au dessus de la surface 17 du filtre 15 planté de roseaux. L'utilisation de buses d'arrosage disposées au niveau de la surface supérieure 17 du filtre est également envisageable, mais jugé peu pratique car le développement végétatif des roseaux limiterait leur efficacité. L'inondation est opérée grâce à des bouches d'alimentations disposées régulièrement, par exemple en quinconce, au niveau du filtre planté de roseaux. Une bouche d'alimentation se présente par exemple sous la forme d'une canalisation verticale qui émerge au dessus de la surface supérieure 17 du filtre 15 planté de roseaux 16. L'ouverture de la canalisation est munie d'une cloche de protection, d'une part, pour empêcher l'entrée d'objets dans la canalisation, et d'autre part, pour rabattre les flux d'effluents vers la surface supérieure 17. Pour éviter le ravinement autour de la bouche d'alimentation, on peut prévoir de disposer des graviers autour de la bouche d'alimentation.

Le filtre 15 planté de roseaux 16 est réalisé en déblais remblais. Il comporte une fosse 19 dont les parois latérales 20 et le fond 21 sont réalisés, de préférence, en un matériau imperméable, pour éviter la contamination de l'environnement avec des effluents qui ne seraient pas encore épurés ou traités de façon satisfaisante. Il s'agit notamment d'une géomembrane prise en sandwich dans un géotextile de protection.

La fosse 19 est remplie de bas en haut par des matériaux de remplissage dont la granulométrie diminue du bas vers le haut. Dans la variante illustrée à la figure 1, le filtre 15 planté de roseaux du premier étage de nitrification-dénitrification 10 se distingue du filtre 45 de l'étage suivant 40 par la granulométrie des différentes couches de matériaux de remplissage. D'autres caractéristiques permettent de les distinguer. Elles seront abordées dans la suite de la description.

En l'occurrence, le filtre 15 planté de roseaux comporte, de bas en haut, une couche drainante 22 de fond constituée par exemple par des galets, une ou plusieurs couches intermédiaires de gravier puis une ou plusieurs couches de filtration 23 comprenant des graviers et des sables. Par exemple, les galets de la couche drainante 22 de fond ont un diamètre de 20 à 60 cm, sur une épaisseur de 10 cm, la couche intermédiaire de graviers a une épaisseur de 20 cm et contient des graviers de 10 à 20 cm de diamètre. Les couches filtrantes 23 contiennent d'abord une épaisseur de 20 cm de graviers de 40 à 10 cm de diamètre puis, au dessus, une couche de 30 cm d'épaisseur de graviers de 2 à 5 cm de diamètre éventuellement mélangés à des sables.

L'eau percole gravitairement à travers les couches filtrantes 23, les couches intermédiaires et la couche drainante 22. L'eau percolée est récupérée au fond du filtre par un dispositif de drainage comprenant une série de drains 24 et qui, de préférence, converge vers un dispositif d'évacuation 25 où sont collectés les effluents qui se sont écoulés à travers le filtre 15 planté de roseaux 16.

Le filtre 15 planté de roseaux comporte une zone inondée 26 et une zone non inondée 27 dont les hauteurs respectives h_{D} et h_{N} sont contrôlées grâce au dispositif d'évacuation 25 des effluents percolés 28.

Le dispositif d'évacuation 25 des effluents percolés 28 peut être disposé à l'extérieur de la fosse 15, comme illustré à la figure 1, ou à l'intérieur de la fosse 15 comme illustré à la figure 2. Le dispositif d'évacuation 25 comprend un réservoir 30 muni d'une bouche d'alimentation 31 en effluents percolés et collectés par la dispositif de drainage. L'évacuation des effluents percolés 28 est assurée par une bouche d'évacuation 32. La hauteur de la bouche d'évacuation 32 est intermédiaire entre le fond 21 du filtre 25 et la surface supérieure 17. Ainsi, les effluents percolés 28 s'accumulent dans le réservoir 30 jusqu'à ce que le niveau 29 des effluents atteigne la hauteur de la bouche d'évacuation 32, ce qui permet leur évacuation. De la sorte, la zone inondée 26 se forme dans la partie inférieure du filtre 15 planté de roseaux, tandis qu'une zone supérieure non inondée 27 est délimitée. Le niveau de l'eau 29 dans le filtre 15 planté de roseaux dépend donc de la hauteur h_{D} de la bouche d'évacuation 32 du dispositif d'évacuation 25.

Selon une variante, la bouche d'évacuation 32 correspond à l'ouverture supérieure d'une cheminée 33. Avantageusement, la hauteur de la cheminée 33 est réglable. La cheminée 33 communique dans sa partie inférieure avec une canalisation 35 de déversement des effluents percolés 28. En outre, il est possible de munir la partie inférieure de la cheminée 33 d'une vanne de vidange 34, pour faciliter la vidange du réservoir 30 et du filtre 15 planté de roseaux.

Selon une autre variante non illustrée, la bouche d'évacuation se présente sous la forme d'un simple trop plein prévu dans la paroi du réservoir 30, d'où s'écoulent les effluents percolés 28.

Des roseaux 16 sont plantés à la surface du lit 15. Leur développement végétatif, en particulier le développement racinaire et des rhizome, favorise les transferts d'oxygène vers la zone supérieure non inondée 27, d'une part, par transfert à partir de l'appareil foliaire et caulinaire des roseaux, et d'autre part du fait du déplacement de matériel de remplissage engendré par la croissance racinaire qui représente des chemins de passage préférentiel de l'air à travers le matériel de remplissage. Le développement racinaire des roseaux permet en outre d'éviter l'encroûtage de la surface 17 du filtre par les boues d'épuration amenées à partir du poste de refoulement.

Ainsi, la zone supérieure non inondée 27 se trouve en conditions aérobies. Elle est favorable au développement d'une flore microbienne aérobie, nitrifiante, qui utilise les boues d'épuration apportée en surface 17 du filtre 15, comme source de carbone. Ainsi, la dégradation des boues en surface par des bactéries nitrifiantes facilite un transfert de carbone vers la zone inondée 26. Cette zone inondée est en conditions anaérobies, ou anoxiques. Elle autorise ainsi le développement d'une flore bactérienne dénitrifiante apte à employer les nitrites produites par les bactéries nitrifiantes, ainsi que les sources de carbone afférentes, et à assurer la dénitrification des effluents.

Avantageusement, la hauteur h_{D} de la zone inondée 26 est supérieure à la hauteur h_{N} de la zone inondée 27. Dans une variante particulière, h_{D} est 1,5 à 4 fois plus grand que h_{N}. Dans une autre variante, h_{D} est varie de 1,5 à 2 fois h_{N}.

Cette disposition du filtre planté de roseaux évite que l'alimentation carbonée des bactéries dénitrifiantes constitue un facteur limitant pour leur métabolisme, étant donné que la source de carbone provient de la zone aérobie non inondée 27, régulièrement alimentée en effluents. En outre, le temps de contact des bactéries dénitrifiantes avec les effluents à traiter est augmenté par l'immersion de la zone inondée 26.

Les effluents percolés 28 sont évacués par exemple par l'intermédiaire d'une pompe 36 qui relève les effluents vers le poste de refoulement 4, ou comme cela est illustré à la figure 1, vers un deuxième filtre 45 planté de roseaux, ou encore, si la qualité des effluents percolés 28 est jugée satisfaisante, vers une zone de déversement des effluents dans l'environnement. Ces diverses possibilités peuvent être gérées grâce à une vanne ou un robinet 37, disposé en aval de la pompe 36. Le fonctionnement de la pompe 36 et de la vanne ou du robinet 37 peuvent être contrôlés à distance et/ou leur fonctionnement est asservi ou automatisé.

En moyenne, le traitement de nitrification-dénitrification sur le filtre 15 planté de roseaux permet d'éliminer jusqu'à 90 % de l'azote NTK, à une température ambiante minimum d'environ 12°C. En outre, environ 95 % de la DBO₅ est éliminée des effluents en sortie du filtre planté de roseaux (valeur globale, effluents percolés 28 par rapport aux effluents à traiter issus du poste de dégrillage).

Comme illustré à la figure 1, il peut être prévu dans une variante un deuxième étage 40 de nitrification-dénitrification, dont le fonctionnement est en tout point comparable à celui du premier étage 10 de nitrification-dénitrification.

Comme cela a été signalé ci-dessus, les filtres 15, 45 plantés de roseaux se distinguent notamment l'un de l'autre par la granulométrie des matériaux de remplissage utilisés. Ils peuvent aussi se distinguer par la hauteur de la zone inondée, par rapport à celle de la zone non inondée.

Par exemple, le filtre 45 du deuxième étage de nitrification-dénitrification comporte, de bas en haut, un couche drainante de fond comprenant des galets (par exemple, galets de diamètre 20-60 cm, épaisseur 10 cm), puis des couches intermédiaires de graviers (par exemple, graviers de 10 à 20 cm de diamètre, et au dessus, de 4 à 10 cm de diamètre, chaque couche sur une épaisseur de 10 cm), et des couches filtrantes supérieures (par exemple, 20 cm de graviers de 2 à 5 cm de diamètre et au dessus, 30 cm de sable).

Préférentiellement, la hauteur h_{D2} de la zone inondée 46 du deuxième filtre 45 planté de roseaux est inférieure à la hauteur h_{D} de la zone inondée 26 du premier filtre 15 planté de roseaux. En outre, il est préférable que la hauteur h_{D2} de zone inondée 46 du deuxième filtre 45 planté de roseaux soit aussi inférieure à la hauteur h_{N2} de la zone non inondée 47 du deuxième filtre 45 planté de roseaux. Avantageusement, les rapports h_{N2} / h_{D2} du deuxième filtre 45 sont inversés par comparaison avec les rapports h_{N} / h_{D} du premier filtre 15 planté de roseaux.

En effet, les effluents percolés 28 collectés dans le dispositif d'évacuation 25 du premier filtre 15 planté de roseaux sont beaucoup moins chargés en matière carbonée que les effluents et les boues d'épuration 7 provenant du poste de refoulement 4 et déversés dans le premier étage 10 de nitrification-dénitrification. Dans cette variante, les effluents percolés 28 sont déversés dans le deuxième étage 40 de nitrification-dénitrification. Le fait que la zone non inondée 47, où se développe une flore bactérienne aérobie nitrifiante, soit plus haute que la zone inondée, permet de favoriser l'activité métabolique de la flore bactérienne nitrifiante et donc d'améliorer l'alimentation carbonée des bactéries dénitrifiantes de la zone inondée 46.

Le deuxième étage de nitrification-dénitrification permet d'assurer un traitement de la pollution azotée résiduelle qui demeure dans les effluents percolés 28 provenant du premier filtre 15 planté de roseaux. Ainsi, en sortie du deuxième filtre 45 planté de roseaux, à une température ambiante minimale de 12°C, le traitement des effluents permet d'éliminer en moyenne près de 99% de la DBO₅ et près de 96 % de l'azote NTK (de 95 à 98 % de l'azote NTK par rapport aux effluents à traiter issus du poste de dégrillage).

Le fonctionnement des étages de nitrification-dénitrification va maintenant être décrit plus en détails. Les étages 10, 40 de nitrification-dénitrification sont alimentés de préférence par bâchées, c'est-à-dire qu'une quantité prédéterminée d'effluents/de boues d'épuration, est déversée sur le filtre planté de roseaux. Le déclenchement d'une bâchée peut dépendre par exemple du niveau d'effluents dans le poste de refoulement 4. Cela permet de couvrir au mieux la surface du filtre planté de roseaux d'une pellicule d'effluents à traiter. La qualité de la répartition des effluents à la surface du filtre est très importante, car elle détermine la bonne aération du filtre (en particulier de la zone non inondée) et la filtration des effluents.

Avantageusement, chaque étage de nitrification-dénitrification est divisé en une pluralité de cellules, de préférence 3 cellules, dont l'alimentation en effluents est réalisée par permutation circulaire. Quand une cellule reçoit des effluents, les autres ne sont pas alimentées. Ce fonctionnement par alternance laisse un temps suffisant pour la minéralisation des effluents et des boues d'épuration dans les cellules non alimentées. Un cycle d'alimentation peut durer par exemple une semaine. Cela favorise un régime de fonctionnement permanent (le fonctionnement transitoire correspondant notamment au remplissage d'une cellule).

L'alimentation des étages de nitrification-dénitrification et des différentes cellules peut être, par exemple, semi-automatique ou automatique, c'est-à-dire qu'elle nécessite, ou non, l'intervention occasionnelle, de personnel pour assurer le fonctionnement de l'installation. La permutation d'une cellule à l'autre est généralement automatisé, par exemple par l'utilisation d'un dispositif comprenant une minuterie.

En outre, il est possible de prévoir des détecteurs de niveaux, en particulier au niveau du poste de refoulement 4, afin de déterminer si la réserve d'effluents dans le poste de refoulement est suffisante pour générer une bâchée pour alimenter le premier étage de nitrification-dénitrification. Cela peut également permettre d'orienter les effluents percolés 28 collectés dans le dispositif d'évacuation 25, vers le poste de refoulement 4, vers le deuxième étage de nitrification-dénitrification 40 , ou vers la zone de déversement.

Il est également envisageable de prévoir de commander l'évacuation des effluents percolés en fonction de leur qualité, en particulier en fonction de leur DBO₅ ou de leur azote NTK.

Parmi d'autres avantages, on peut citer le fait que le développement des roseaux permet de masquer, au moins partiellement, les parties construites de l'installation, ce qui améliore son intégration dans le paysage.

## Revendications

1. Procédé de traitement d'eaux usées comprenant l'élimination des principaux polluants y compris la matière en suspension, la matière organique et les polluants azotés, comprenant les étapes essentielles suivantes :
- on réalise un prétraitement biologique des eaux usées à traiter, à l'aide d'au moins un lit bactérien, puis,
- on réalise un traitement biologique de nitrification-dénitrification des boues d'épuration obtenues en sortie du lit bactérien, à l'aide d'au moins un filtre planté de roseaux à écoulement vertical, les boues d'épuration constituant une source de carbone pour la nitrification et pour la dénitrification, dans lequel, en régime de fonctionnement permanent, au moins un filtre de nitrification-dénitrification comporte une zone inférieure inondée et une zone supérieure non inondée, où se déroulent, respectivement, un traitement biologique essentiellement anaérobie de dénitrification et un traitement biologique essentiellement aérobie de nitrification, et dans lequel aucune source de carbone supplémentaire est ajoutée.

2. Procédé de traitement d'effluents selon la revendication 1, dans lequel, en régime de fonctionnement permanent, la hauteur de la zone inondée d'au moins un filtre de nitrification-dénitrification est supérieure ou égale à la hauteur de sa zone non inondée.

3. Procédé selon la revendication 1, utilisant une installation pour sa mise en oeuvre comprenant :
- au moins un lit bactérien équipé d'une alimentation en effluents à traiter et équipé d'une évacuation des boues d'épuration obtenues en sortie du lit bactérien,
- au moins un étage de nitrification-dénitrification comprenant un filtre planté de roseaux à écoulement vertical, dont la surface supérieure est équipée d'une alimentation en boues d'épuration provenant du lit bactérien, et dont le fond est équipé d'un dispositif de drainage pour collecter les effluents s'étant écoulés à travers le filtre planté de roseaux,
**caractérisée en ce que** les effluents collectés par le dispositif de drainage sont évacués de l'étage de nitrification-dénitrification à l'aide d'une dispositif d'évacuation des effluents comprenant au moins une bouche d'évacuation disposée à une hauteur comprise entre le fond du filtre et la surface supérieure du filtre, formant ainsi une zone inférieure inondée et une zone supérieure non inondée dans le filtre planté de roseaux.

4. Procédé selon la revendication 3, dans lequel le dispositif d'évacuation des effluents comprend un réservoir muni d'au moins une bouche d'alimentation en effluents collectés par le dispositif de drainage et muni d'au moins une bouche d'évacuation des effluents, ladite bouche d'évacuation se présentant sous la forme d'un trop-plein.

5. Procédé selon la revendication 3 ou 4, dans lequel la hauteur d'au moins une bouche d'évacuation est contrôlable.

6. Procédé selon l'une quelconque des revendications 3 à 5, comprenant au moins deux étages de nitrification-dénitrification successifs, la hauteur de la zone inondée du premier étage étant différente de la hauteur de la zone inondée d'au moins un étage suivant, de préférence supérieure.

7. Procédé selon l'une quelconque des revendications 3 à 5, dans lequel le filtre planté de roseaux de chaque étage de nitrification-dénitrification est divisé en une pluralité de cellules, de préférence au moins trois cellules, chaque cellule étant alimentées en effluents par permutation circulaire.

8. Procédé selon l'une quelconque des revendications 3 à 7, comprenant en outre un dispositif de recirculation des effluents collectés par un dispositif de drainage vers au moins un étage de nitrification-dénitrification précédent et/ou vers le lit bactérien.

9. Procédé selon la revendication 8, dans lequel le dispositif de recirculation des effluents est asservi au moins à un détecteur du volume d'effluents à traiter et/ou à un détecteur de la qualité des effluents obtenus à la sortie de l'installation.

## Patentansprüche

1. Verfahren zur Behandlung von Abwasser, das die Beseitigung der hauptsächlichen Schmutzstoffe, darunter die suspendierte Substanz, die organische Substanz und die stickstoffhaltigen Schmutzstoffe, umfasst, wobei man in den folgenden wesentlichen Schritten:
- eine biologische Vorbehandlung des zu behandelnden Abwassers mithilfe mindestens eines Tropfkörpers durchführt und dann
- eine biologische Nitrifikations-Denitrifikationsbehandlung des nach dem Tropfkörper erhaltenen Klärschlamms mithilfe mindestens eines Schilfrohrfiltersystems mit vertikaler Strömung durchführt, wobei der Klärschlamm eine Kohlenstoffquelle für die Nitrifikation und die Denitrifikation bildet, wobei in der Dauerbetriebsweise mindestens ein Nitrifikations-Denitrifikationsfilter eine untere überflutete Zone und eine obere nicht überflutete Zone enthält, in denen jeweils eine im Wesentlichen anaerobe biologische Denitrifikationsbehandlung und eine im Wesentlichen aerobe biologische Nitrifikationsbehandlung ablaufen, und wobei keinerlei zusätzliche Kohlenstoffquelle zugegeben wird.

2. Verfahren zur Behandlung von Abwasser nach Anspruch 1, wobei in der Dauerbetriebsweise die Höhe der überfluteten Zone mindestens eines Nitrifikations-Denitrifikationsfilters höher als die oder gleich der Höhe ihrer nicht überfluteten Zone ist.

3. Verfahren nach Anspruch 1, das für seine Durchführung eine Anlage einsetzt, die Folgendes umfasst:
- mindestens ein Tropfkörper, der mit einer Beschickung mit dem zu behandelnden Abwasser und mit einer Ausleitung für Klärschlamm, der am Ausgang des Tropfkörpers erhalten wird, ausgestattet ist,
- mindestens eine Nitrifikations-Denitrifikationsstufe, die ein Schilfrohrfiltersystem mit vertikaler Strömung umfasst, dessen obere Oberfläche mit einer Beschickung mit aus dem Tropfkörper stammendem Klärschlamm ausgestattet ist und dessen Boden mit einer Auslassvorrichtung zum Sammeln des Abwassers, das durch das Schilfrohrfiltersystem geflossen ist, ausgestattet ist,
**dadurch gekennzeichnet, dass** das durch die Auslassvorrichtung gesammelte Abwasser von der Nitrifikations-Denitrifikationsstufe mithilfe einer Abwasserausleitungsvorrichtung ausgeleitet wird, die mindestens eine Auslassöffnung umfasst, die in einer Höhe zwischen dem Boden des Filters und der oberen Oberfläche des Filters angebracht ist, so dass eine untere überflutete Zone und eine obere nicht überflutete Zone in dem Schilfrohrfiltersystem gebildet werden.

4. Verfahren nach Anspruch 3, wobei die Abwasserausleitungsvorrichtung ein Reservoir umfasst, das mit mindestens einer Beschickungsöffnung für das durch die Auslassvorrichtung gesammelte Abwasser und mit mindestens einer Auslassöffnung für Abwasser ausgestattet ist, wobei die Auslassöffnung in Form einer Überlaufleitung vorliegt.

5. Verfahren nach Anspruch 3 oder 4, wobei die Höhe mindestens einer Auslassöffnung steuerbar ist.

6. Verfahren nach einem der Ansprüche 3 bis 5, das mindestens zwei aufeinanderfolgende Nitrifikations-Denitrifikationsstufen umfasst, wobei die Höhe der überfluteten Zone der ersten Stufe verschieden von der Höhe der überfluteten Zone von mindestens einer folgenden Stufe, vorzugsweise höher, ist.

7. Verfahren nach einem der Ansprüche 3 bis 5, wobei das Schilfrohrfiltersystem jeder Nitrifikations-Denitrifikationsstufe in eine Mehrzahl von Zellen, vorzugsweise mindestens drei Zellen, unterteilt ist, wobei jede Zelle mit Abwasser durch kreisförmigen Wechsel beschickt wird.

8. Verfahren nach einem der Ansprüche 3 bis 7, das außerdem eine Vorrichtung zur Rezirkulation des durch eine Auslassvorrichtung gesammelten Abwassers zu mindestens einer vorhergehenden Nitrifikations-Denitrifikationsstufe und/oder zum Tropfkörper umfasst.

9. Verfahren nach Anspruch 8, wobei die Vorrichtung zur Rezirkulation des Abwassers mit mindestens einem Sensor für das Volumen des zu behandelnden Abwassers und/oder einem Sensor für die Qualität des am Ausgang der Anlage erhaltenen Abwassers gesteuert wird.

## Claims

1. Method for treating waste water, comprising removing the main pollutants, including suspended matter, organic matter and nitrogenous pollutants, comprising the following main steps:
- the waste water to be treated is subjected to a biological pre-treatment with the aid of at least one bacterial bed, then
- the waste water sludge obtained at the outlet from the bacterial bed is subjected to a biological nitrification-denitrification treatment with the aid of at least one vertical-flow reed bed filter, the waste water sludge constituting a source of carbon for the nitrification process and for the denitrification process, wherein, in permanent operating mode, at least one nitrification-denitrification filter comprises a lower inundated zone and an upper non-inundated zone where an essentially anaerobic biological denitrification treatment and an essentially aerobic biological nitrification treatment take place respectively and to which no additional source of carbon is added.

2. Method for treating waste water as claimed in claim 1, wherein, in permanent operating mode, the height of the inundated zone of at least one nitrification-denitrification filter is higher than or equal to the height of its non-inundated zone.

3. Method as claimed in claim 1, using an installation for the implementation thereof, comprising:
- at least one bacterial bed equipped with an intake for waste water to be treated and equipped with a discharge for waste water sludge obtained at the outlet of the bacterial bed,
- at least one nitrification-denitrification stage comprising a vertical-flow reed bed filter, the upper surface of which is equipped with an intake for waste water sludge from the bacterial bed, and the base of which is equipped with a drainage device for collecting the waste water that has passed through the reed bed filter,
**characterised in that** the waste water collected by the drainage device is discharged from the nitrification-denitrification stage with the aid of a waste water discharge device comprising at least one discharge outlet disposed at a height between the filter base and the upper surface of the filter, thereby forming a lower inundated zone and an upper non-inundated zone in the reed bed filter.

4. Method as claimed in claim 3, wherein the waste water drainage device comprises a tank equipped with at least one intake inlet for waste water collected by the drainage device and equipped with at least one waste water discharge outlet, said discharge outlet being provided in the form of an overflow.

5. Method as claimed in claim 3 or 4, wherein the height of at least one discharge outlet is controllable.

6. Method as claimed in any one of claims 3 to 5, comprising at least two successive nitrification-denitrification stages, the height of the inundated zone of the first stage being different from the height of the inundated zone of at least one subsequent, preferably upper, stage.

7. Method as claimed in any one of claims 3 to 5, wherein the reed bed filter of each nitrification-denitrification stage is divided into a plurality of cells, preferably at least three cells, each cell being supplied with waste water by circular permutation.

8. Method as claimed in any one of claims 3 to 7, further comprising a device for recirculating waste water collected by a device draining into at least one preceding nitrification-denitrification stage and/or into the bacterial bed.

9. Method as claimed in claim 8, wherein the device for recirculating the waste water is automatically controlled by at least one sensor for detecting the volume of waste water to be treated and/or a sensor for detecting the quality of the waste water obtained at the installation outlet.
